(19) Europäisches Patentamt
European Patent Office
Office européen des brevets

(11) **EP 2 469 701 B1**

(12) **FASCICULE DE BREVET EUROPEEN**

(45) Date de publication et mention de la délivrance du brevet:
**29.07.2020 Bulletin 2020/31**

(51) Int Cl.:
***H02P 9/08*** ***(2006.01)***

(21) Numéro de dépôt: **11194396.5**

(22) Date de dépôt: **19.12.2011**

(54) **Système de production électrique**

Elektrisches Produktionssystem

Electric production system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2010 FR 1060955**

(43) Date de publication de la demande:
**27.06.2012 Bulletin 2012/26**

(73) Titulaire: **GE Energy Products France SNC 90000 Belfort (FR)**

(72) Inventeur: **Biellmann, Hervé 90300 ELOIE (FR)**

(74) Mandataire: **Delprat, Olivier et al Casalonga & Partners Bayerstrasse 71/73 80335 München (DE)**

(56) Documents cités:
**WO-A1-97/22176          US-A1- 2004 080 164
US-A1- 2005 206 343          US-B1- 6 281 595**

EP 2 469 701 B1

**Description**

L'invention appartient au domaine technique des alternateurs. Elle s'applique notamment aux turbines et aux auxiliaires des centrales de production d'énergie électrique.

Au démarrage d'une centrale électrique, il est connu d'utiliser un alternateur en mode moteur en l'alimentant à partir d'un convertisseur, afin d'entraîner en rotation la ligne d'arbre de la turbine et de l'alternateur. Il est également connu d'utiliser un convertisseur pour alimenter des équipements auxiliaires tels que des moteurs de pompe.

À l'heure actuelle, deux types de convertisseurs différents sont habituellement utilisés à savoir un convertisseur de tension pour l'alimentation d'équipement auxiliaire (par exemple un moteur) et un convertisseur de courant pour le démarrage de l'alternateur. Si l'un des deux convertisseurs fait défaut alors respectivement l'alternateur ou l'équipement auxiliaire ne pourra pas fonctionner. Dans le cas où les équipements auxiliaires à alimenter sont nombreux, il faut utiliser autant de convertisseurs qu'il y a d'équipements auxiliaires et il faut également prévoir un convertisseur séparé pour le démarrage de l'alternateur. Chacun de ces convertisseurs présente un coût et un encombrement au sol relativement importants, alors que les équipements qui les utilisent notamment l'alternateur en mode moteur, et les équipements auxiliaires ne sont pas toujours utilisés simultanément.

De l'état de la technique antérieure, on connait également les documents suivants.

Le document US2004/080164 décrit un système générateur à turbine. Ce système comprend un onduleur pour le démarrage de la turbine utilisé pour de nombreux usages. L'onduleur de démarrage est connecté au moteur de commande de la pompe pour actionner la pompe de recirculation de la chaudière avec l'onduleur de démarrage.

Le document US2005/206343 décrit un système de génération d'énergie comprenant une première unité de génération d'énergie comprenant une batterie de stockage et une deuxième unité de génération d'énergie ne comprenant pas de batterie de stockage, la batterie de stockage étant partagée entre les deux unités de génération d'énergie. Les convertisseurs 1-02 et 1-03 sont capables de démarrer la turbine de manière conjointe. Le convertisseur 1-02 permet d'alimenter un auxiliaire.

Toutefois aucun de ces documents ne divulgue que les convertisseurs de tension sont placés en parallèle dans le moyen de conversion et que la somme des puissances électriques des convertisseurs est supérieure ou égale à la puissance pour démarrer l'alternateur en mode moteur jusqu'à sa vitesse nominale.

Il existe donc un besoin pour réduire le nombre de convertisseurs à utiliser au sein d'une centrale électrique, dédiée-s à l'alternateur et aux équipements auxiliaires.

Il existe également un besoin pour augmenter la fiabilité de la conversion mise en œuvre par les convertisseurs.

L'invention se propose de résoudre tout ou partie des problèmes évoqués ci-dessus.

Selon un mode de réalisation, un système de production d'électricité comprenant:

- un alternateur par exemple synchrone comprenant un rotor et un stator ;
- un moyen d'entrainement du rotor, par exemple une turbine à gaz;
- ledit alternateur ayant un premier mode de fonctionnement dit mode alternateur dans lequel le rotor est entraîné par le moyen d'entrainement du rotor et l'alternateur fournit de l'électricité et un deuxième mode de fonctionnement dit mode moteur dans lequel l'alternateur est alimenté en électricité et le rotor fournit une force mécanique motrice ;
- un moyen de conversion capable d'alimenter l'alternateur en mode moteur avec une fréquence qui varie de façon que le rotor atteigne une certaine vitesse de rotation; et
- plusieurs équipements électriques auxiliaires, par exemple au moins un moteur asynchrone, le moyen de conversion comprend pour chacun des équipements électriques auxiliaires un convertisseur de tension capable d'alimenter ledit équipement auxiliaire, une partie des convertisseurs de tension de l'ensemble des équipements auxiliaires étant capable d'alimenter conjointement l'alternateur en mode moteur.

Selon une caractéristique générale de ce système de production d'électricité, lesdits convertisseurs de tension sont placés en parallèle dans le moyen de conversion et la somme des puissances électriques desdits convertisseurs est supérieure ou égale à la puissance est supérieure ou égale à la puissance pour démarrer l'alternateur en mode moteur jusqu'à sa vitesse nominale.

Ainsi, le convertisseur de l'alternateur étant un convertisseur de tension, il peut être utilisé pour alimenter tout équipement auxiliaire et notamment un moteur asynchrone. C'est avantageux car les moteurs asynchrones sont, pour une même puissance, moins chers que les moteurs synchrones. Dans le cas d'un unique équipement auxiliaire, seul un convertisseur est alors nécessaire pour pouvoir alimenter l'alternateur et l'équipement auxiliaire. Dans tous les cas, un convertisseur peut être supprimé alors que l'on peut continuer à alimenter tous les équipements auxiliaires simultanément. La puissance totale des convertisseurs installés peut ainsi être réduite. Dans le cas où plusieurs équipements sont utilisés, il n'est pas nécessaire que chacun des convertisseurs puisse alimenter l'alternateur en mode moteur. Il suffit que l'ensemble des convertisseurs puisse alimenter l'alternateur en mode moteur. Pour cela on utilise avantageusement une architecture selon laquelle les convertisseurs de tension qui se comportent comme des sources de tension sont placés en parallèle de sorte que la puissance fournie par l'ensemble des convertisseurs est alors la somme de toutes les puissances des convertisseurs. Il n'est alors plus nécessaire de disposer de convertisseur avec une grande puissance pour démarrer la ligne d'arbre lorsque plusieurs équipements auxiliaires sont présents dans le système de production d'électricité.

Selon un autre mode de réalisation, le système comprend un unique équipement électrique auxiliaire et un moyen de conduction comprenant une première branche reliant le convertisseur de tension à l'alternateur et une deuxième branche reliant le convertisseur de tension audit équipement électrique auxiliaire, chacune des deux branches comportant un organe de coupure de manière à alimenter alternativement l'alternateur en mode moteur et ledit équipement électrique auxiliaire avec le convertisseur de tension.

En dehors de la phase de démarrage de la ligne d'arbre de l'alternateur, le convertisseur de tension n'est pas utilisé par l'alternateur et peut donc être utilisé pour alimenter un équipement auxiliaire en basculant l'organe de coupure.

Selon un mode de réalisation, le système comprend un moyen d'alimentation pour alimenter le moyen de conversion, lesdits au moins un équipement électrique auxiliaire étant également reliés au moyen d'alimentation de manière que les au moins un équipement électrique auxiliaire soient alimentés alternativement avec le moyen de conversion et avec le moyen d'alimentation.

Les équipements auxiliaires sont alimentés de manière alternative par les convertisseurs et le moyen d'alimentation. Ils peuvent être alimentés directement par le moyen d'alimentation sans l'utilisation des convertisseurs. Ainsi, la disponibilité des convertisseurs vis-à-vis de l'alternateur augmente. De plus, les équipements auxiliaires peuvent fonctionner même si les convertisseurs sont utilisés pour démarrer l'alternateur en mode moteur.

Selon encore une autre caractéristique, le moyen de conversion comprend en outre au moins un convertisseur de tension supplémentaire, ledit convertisseur de tension supplémentaire étant relié par des moyens de conduction à l'alternateur en mode moteur et/ou à au moins un des équipements électriques auxiliaires de manière à permettre une redondance de l'alimentation de l'alternateur et/ou des équipements auxiliaires.

En ajoutant un convertisseur de tension supplémentaire, on obtient un moyen d'alimentation supplémentaire qui peut pallier les défauts éventuels des autres convertisseurs de tension. Ainsi, la fiabilité du moyen de conversion et la disponibilité des équipements auxiliaires et de l'alternateur sont augmentées. Avec ce ou ces convertisseurs supplémentaires il est également possible d'alimenter les équipements auxiliaires et l'alternateur simultanément.

Selon un autre mode de réalisation, la turbine à gaz est une micro-turbine.

Selon un autre mode de réalisation, le moyen d'entrainement du rotor est un moteur thermique.

D'autres caractéristiques et avantages de l'invention apparaîtront à l'examen de la description détaillée de modes de mise en œuvre et de réalisation, nullement limitatifs, et des dessins annexés sur lesquels :

- la figure 1 illustre schématiquement un exemple d'un alternateur avec un équipement auxiliaire selon l'état de la technique;
- la figure 2 illustre un étage d'alimentation et de démarrage selon l'invention;
- la figure 3 illustre un mode de réalisation d'un convertisseur pour un étage d'alimentation et de démarrage selon l'invention; et
- la figure 4 montre une variante d'un étage d'alimentation et de démarrage à plusieurs équipements auxiliaires.

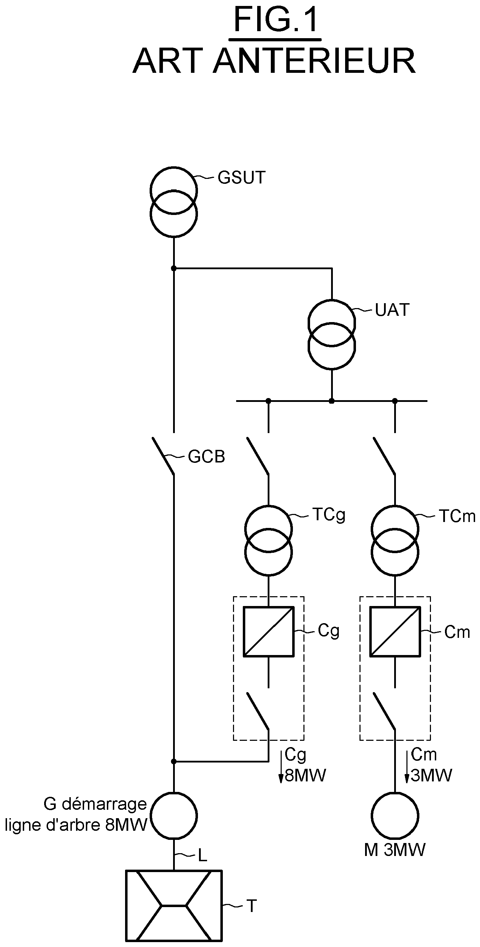

La figure 1 illustre un système de production d'électricité selon l'état de la technique et, en particulier, son étage d'alimentation et de démarrage. Il comprend un alternateur G par exemple synchrone et un transformateur de groupe GSUT. L'alternateur G comprend un rotor et un stator. L'alternateur G peut fonctionner soit dans un mode alternateur, dans lequel il produit de l'électricité lorsque le rotor est entraîné, soit dans un mode moteur, pour le démarrage de la turbine. En mode alternateur, le rotor est entraîné par un moyen d'entraînement T par exemple une turbine à gaz par l'intermédiaire d'une ligne d'arbre L et l'alternateur fournit ainsi de l'énergie au réseau électrique via le transformateur de groupe GSUT. La liaison entre l'alternateur G et le transformateur de groupe GSUT comprend en outre un disjoncteur de groupe GCB qui permet de couper la transmission du courant produit par l'alternateur.

Dans le cas par exemple où le rotor est entraîné par une turbine à gaz, la vitesse de rotation est alors très importante de l'ordre plusieurs milliers de tours par minute (de 2000 à 3000 Tr/min). Ainsi, au démarrage, l'alternateur est d'abord utilisé en mode moteur de manière à entraîner le rotor jusqu'à une vitesse de rotation suffisante VS c'est-à-dire une vitesse de rotation pour qu'il puisse être entraîné par la turbine. Par exemple VS est égale à 1500 Tr/min.

Le système de production d'électricité comprend en outre un convertisseur de courant Cg (ou convertisseur de tension de type source de courant) qui a pour fonction de fournir à l'alternateur en mode moteur un courant de manière que le rotor atteigne une vitesse de rotation suffisante. Le convertisseur de courant Cg fournit un courant électrique dont la fréquence augmente progressivement de manière à augmenter progressivement la vitesse de rotation du rotor jusqu'à obtention de la vitesse de rotation suffisante VS. Selon l'état de la technique, le convertisseur de courant Cg utilisé dans ces applications est habituellement un onduleur de courant comprenant un redresseur de courant à Thyristors et une inductance.

Le convertisseur de courant Cg est alimenté par le transformateur TCg, lui-même alimenté par le transformateur UAT. Le convertisseur de courant comprend en outre un disjoncteur représenté par un interrupteur dans la figure 1. La partie en aval du transformateur UAT, coté alternateur, est sécurisée au moyen d'un disjoncteur entre les transformateurs UAT et Tcg représenté sur la figure 1 par un interrupteur.

Comme on le voit, le système de production électrique comprend par ailleurs un équipement auxiliaire. Par exemple, l'équipement auxiliaire M est un moteur asynchrone. Le moteur M nécessitant une puissance de quelques Mégawatt est alimenté par le convertisseur Cm lui-même alimenté par le transformateur TCm, relié au transformateur UAT. La partie en aval du transformateur UAT, coté équipement auxiliaire, est sécurisée au moyen d'un disjoncteur entre les transformateurs UAT et TCm représenté par un interrupteur sur la figure 1. Le convertisseur Cm est à titre d'exemple de réalisation un convertisseur de tension avec une puissance de l'ordre de quelques Mégawatt correspondant aux besoins de l'équipement auxiliaire.

Comme indiqué précédemment, ce type d'agencement nécessite de prévoir un convertisseur dédié à l'alimentation de l'alternateur, au démarrage de la turbine, et un convertisseur pour chaque équipement auxiliaire.

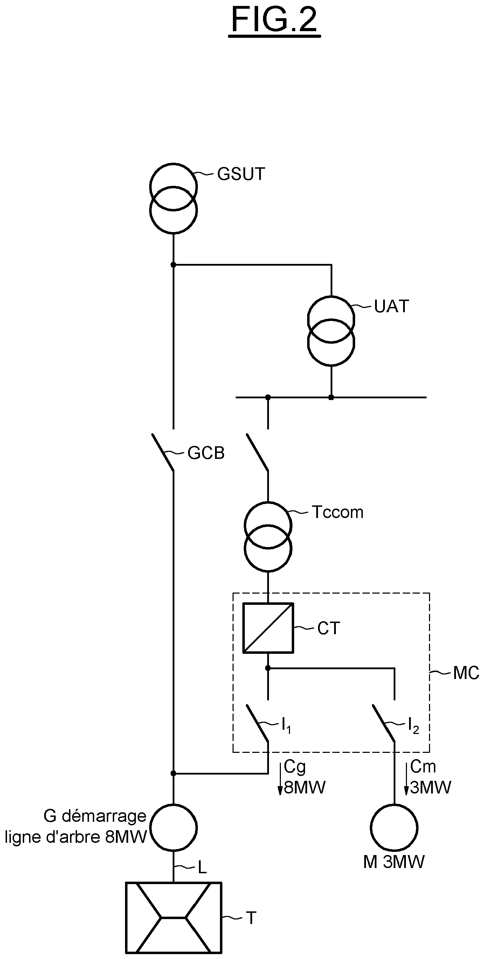

On a représenté sur la figure 2, l'architecture d'un système de production d'électricité doté d'un moyen de conversion MC selon l'invention permettant de pallier cet inconvénient. Le moyen d'entrainement du rotor T de la figure 2, peut être une turbine à gaz, ou tout autre source d'énergie mécanique par exemple une micro turbine ou un moteur thermique par exemple un moteur diesel. Le moyen de conversion MC comprend un unique convertisseur de tension CT associé à un moyen de conduction, par exemple un câblage électrique ou un jeu de barres, reliant le convertisseur de tension CT (ou convertisseur source de tension) à l'alternateur G et à un équipement auxiliaire M. Le moyen de conversion MC est alimenté par un moyen d'alimentation Tccom, par exemple un transformateur, lui-même alimenté par le transformateur UAT. Le moyen d'alimentation Tccom pourrait également être directement un réseau électrique. Le moyen de conduction comprend deux branches, l'une reliant le convertisseur de tension à l'alternateur G et l'autre reliant le convertisseur de tension à l'équipement auxiliaire M qui est, selon un mode de réalisation, un moteur asynchrone. L'équipement auxiliaire pourrait également être une résistance chauffante ou tout autre type d'équipement consommant de l'électricité.

Avantageusement, le convertisseur CT est capable d'alimenter l'alternateur en mode moteur ainsi que l'équipement électrique. Pour cela, on utilise avantageusement un onduleur de tension comportant un redresseur de tension qui sera explicité ci après. Un convertisseur de courant conventionnel, tel que le convertisseur Cg décrit précédemment, ne pourrait pas être utilisé pour alimenter tout équipement auxiliaire et en particulier un moteur asynchrone M. En effet, par construction, un convertisseur de courant Cg comprenant par exemple des ponts à Thyristors ne peut alimenter efficacement que des machines synchrones. Ainsi avec le convertisseur de tension CT, en faisant varier la fréquence on alimente l'alternateur G en mode moteur de façon que son rotor atteigne une vitesse de rotation suffisante VS, c'est-à-dire une vitesse de rotation pour qu'il puisse être entraîné par le moyen d'entraînement.

Par ailleurs, chacune des deux branches comporte un organe de coupure I1 et I2 dont l'état peut être bloqué ou passant. A titre d'exemple de réalisation, l'organe de coupure est un disjoncteur, un sectionneur, ou un interrupteur. L'état de l'organe de coupure de la première branche est différent de celui de l'organe de coupure de la deuxième branche. Ainsi, l'alternateur en mode moteur et le moteur sont alimentés sélectivement et alternativement par le convertisseur CT.

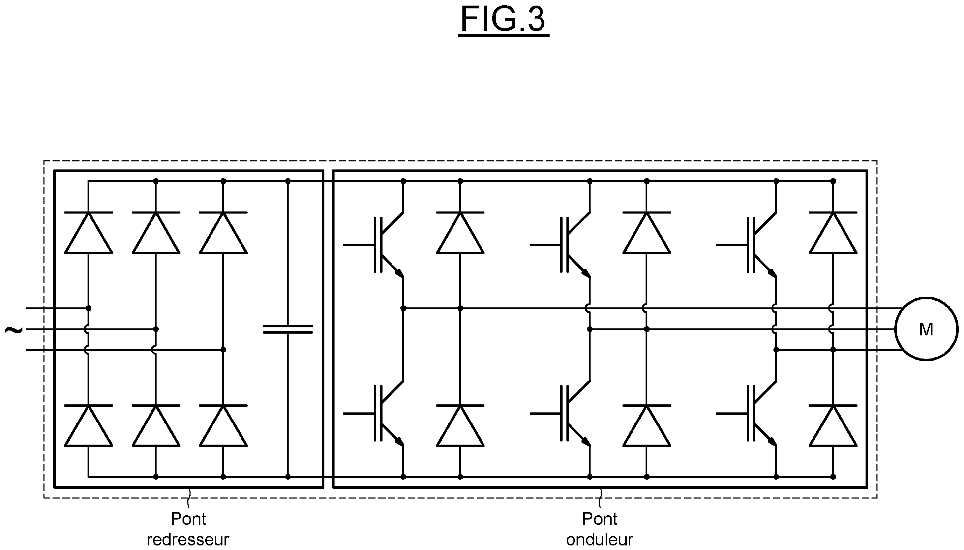

La figure 3 illustre un exemple de réalisation d'un convertisseur de tension CT (ou convertisseur source de tension) de l'étage de la figure 2. Il comprend:

- un pont redresseur triphasé à diodes associé à un condensateur formant une source de tension continue.
- un pont onduleur alimenté par une tension continue qui génère une onde de tension alternative à amplitude et fréquence variables par la technique de Modulation par Largeur d'Impulsions (MLI) bien connue de l'homme du métier. Un pont onduleur à IGBT (Insulated Gâte Bipolar Transistor en langue anglaise) pourrait être utilisé. En variante, un pont onduleur IGCT (Integrated Gate Commutated Thyristor en langue anglaise) pourrait également être utilisé.
- une unité de commande fournissant des ordres de conduction au pont onduleur en fonction de consignes, telles que la rampe de la vitesse de rotation du rotor, le couple maximum,...

Un convertisseur de tension tel que décrit ci avant a l'avantage de pouvoir fournir une puissance suffisante pour alimenter à lui tout seul l'alternateur en mode moteur (de l'ordre de la dizaine de MW). De plus, contrairement au convertisseur Cg, c'est un convertisseur de tension (convertisseur source de tension) il peut donc être utilisé indifféremment pour alimenter des équipements synchrones ou asynchrones, tels que par exemple un moteur asynchrone et un alternateur synchrone.

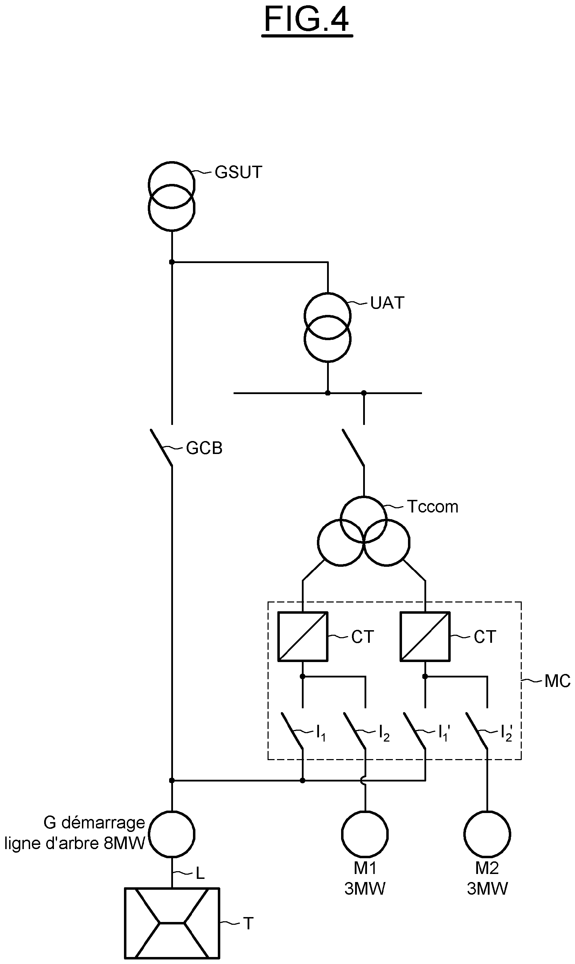

La figure 4 illustre un mode de réalisation de l'étage d'alimentation et de démarrage dans le cas où le système de production d'électricité comprend plusieurs équipements auxiliaires.

Le moyen d'alimentation Tccom est relié au moyen de conversion MC qui alimente un premier et un deuxième équipement auxiliaire M1 et M2, qui sont par exemple deux moteurs asynchrones.

Le moyen de conversion MC comprend ici deux convertisseurs de tension CT, un premier dédié à l'équipement auxiliaire M1 et à l'alternateur en mode moteur, et un deuxième dédié à l'équipement auxiliaire M2 et à l'alternateur en mode moteur. Le premier et le deuxième convertisseur CT sont reliés à l'alternateur G, et aux premier et deuxième équipements auxiliaires par des moyens de conduction.

Les moyens de conduction peuvent être par exemple des jeux de barres ou des câblages électriques.

Le premier convertisseur est relié par une première branche d'un premier moyen de conduction à l'alternateur, pour son alimentation en mode moteur, et par une deuxième branche du premier moyen de conduction à l'équipement auxiliaire M1. Le deuxième convertisseur est relié par une première branche d'un deuxième moyen de conduction à l'alternateur et par une deuxième branche du deuxième moyen de conduction à l'équipement auxiliaire M2. Chacune des quatre branches comporte un organe de coupure I1, I2 I1', I2' ayant un état bloqué ou passant. A titre d'exemple de réalisation, l'organe de coupure est un disjoncteur, un sectionneur, ou un interrupteur. Les organes de coupure sont contrôlés de sorte que le moyen de conversion puisse fonctionner selon deux modes :

- un premier mode dans lequel le premier convertisseur alimente le premier équipement auxiliaire M1 et le deuxième convertisseur alimente le deuxième équipement auxiliaire M2, les organes de coupure I2 et I2' de la deuxième branche du premier et du deuxième moyens de conduction étant passants.
- un deuxième mode dans lequel le premier convertisseur alimente l'alternateur G en mode moteur et le deuxième convertisseur alimente l'alternateur G en mode moteur, les organes de coupure I1 et I1' de la première branche du premier et du deuxième moyens de conduction étant passants.

En variante, en plus de ces deux premiers modes, le moyen de conversion MC peut également fonctionner suivant d'autres modes. Par exemple un troisième mode dans lequel tous les organes de coupure I1, I2, I1' et I2' pourraient être passants ou un quatrième mode dans lequel tous les organes de coupure I1, I2, I1' et I2' pourraient être bloqués. Les organes de coupure du premier moyen de conduction I1 et I2 ou ceux du deuxième moyen de conduction I1' et I2' pourraient être tous ouverts ou tous fermés suivant respectivement un cinquième ou un sixième mode. Un septième mode avantageux, peut consister, par exemple, à alimenter un des équipements auxiliaires M1 ou M2 au moyen d'un des deux convertisseurs de tension CT tout en conservant l'alimentation de l'alternateur par l'autre convertisseur de tension CT (I1 et I2' fermés ou I2 et I1' fermés).

Lorsque le moyen de conversion MC est dans le deuxième mode, du fait de l'utilisation de deux convertisseurs de tension CT (ou convertisseur source de tension) en parallèle, la puissance fournie par les deux convertisseurs s'additionne. Pour alimenter l'alternateur en mode moteur, il est donc simplement nécessaire que la somme des puissances des convertisseurs soit supérieure à la puissance requise pour l'alternateur en mode moteur. Ainsi, les convertisseurs de tension sont utilisés séparément pour alimenter les équipements auxiliaires (M) et l'ensemble des convertisseurs de tension est utilisé conjointement pour alimenter l'alternateur en mode moteur.

Selon une variante, la somme des puissances d'une partie de l'ensemble des convertisseurs est supérieure à la puissance requise pour alimenter l'alternateur en mode moteur. Alors, seule une partie des convertisseurs de tension peut être utilisée pour alimenter conjointement l'alternateur en mode moteur.

Une application numérique simple permet de mettre en évidence le gain de puissance ainsi réalisé :

- le démarrage normal de l'alternateur en mode moteur nécessite 8MW
- chacun des deux équipements auxiliaires nécessite 3MW

Dans le cas d'un convertisseur dédié, par équipement, il faut alors compter une puissance électrique nécessaire de 14 MW (2 . 3 + 8 = 14).

Dans le cas d'un moyen de conversion comportant des convertisseurs de tension selon l'invention alors, seuls deux convertisseurs de 4 MW sont suffisants. Ils peuvent être utilisés séparément pour alimenter les deux équipements auxiliaires (3MW< 4MW) et ils peuvent être utilisés conjointement pour alimenter l'alternateur (8MW = 2 . 4 MW). On obtient ainsi un gain de près de 6 MW (14 MW- 8 MW) pour la puissance totale des convertisseurs.

Le démarrage d'une ligne d'arbre telle qu'illustrée dans la figure 4 comprend dans le cas d'un entraînement par une turbine à gaz plusieurs phases :

- une première phase dans laquelle la ligne d'arbre est entrainée en rotation par le rotor de l'alternateur, l'alternateur étant alimenté par le moyen de conversion MC en mode moteur ;
- une deuxième phase dans laquelle la vitesse de rotation de la ligne d'arbre atteint la valeur VS (par exemple 1500 Tr/min), la ligne d'arbre étant entrainée par le moyen d'entrainement du rotor et par le rotor de l'alternateur. L'alimentation de l'alternateur en mode moteur se poursuit.
- une troisième phase dans laquelle lorsque la ligne d'arbre et l'alternateur atteignent une vitesse nominale VN (par exemple 2500 Tr/min) l'alimentation de l'alternateur par le moyen de conversion peut être arrêtée.

Au cour de ce démarrage, si l'on néglige le couple moteur fourni par la turbine, la montée en vitesse de la ligne d'arbre est régie approximativement par l'équation suivante :

$$\mathrm{Cmo - Cr = J * dN / dt}$$

Avec :

- Cmo : Couple moteur (couple fournit par l'alternateur entraîné en mode moteur)
- Cr : Couple résistant de l'ensemble des machines constituant la ligne d'arbre
- J : Inertie de l'ensemble des machines constituant la ligne d'arbre
- N : Vitesse de rotation de la ligne d'arbre
- t : Temps

Du moment que le couple moteur Cmo reste supérieur au couple résistant Cr, le démarrage de la ligne d'arbre est garanti.

Habituellement, on dimensionne la puissance nécessaire pour le démarrage d'une ligne d'arbre en fonction du couple résistant, de la vitesse de rotation nominale VN et d'une durée de démarrage.

Cela étant, un couple moteur Cmo inférieur pourrait également être utilisé à condition que celui-ci reste supérieur au couple résistant Cr. Ce mode de fonctionnement correspond à un démarrage plus long.

Ainsi, étant donné que le couple résistant Cr augmente avec la vitesse de rotation N, il peut être possible avec un couple moteur Cmo inférieur de démarrer la ligne d'arbre avec une vitesse inférieure, donc une puissance inférieure, si l'on accepte un temps de démarrage plus long.

Par exemple dans le cas d'une turbine à gaz, le couple résistant Cr évolue approximativement avec le carré de la vitesse de rotation N, et la puissance correspondante évolue donc avec le cube de la vitesse de rotation.

Ainsi, pour une vitesse de rotation inférieure de 20% à la vitesse de rotation VN, la puissance moteur correspondant au couple résistant Cr à cette vitesse est divisée par deux (la multiplication 0,8. 0,8. 0,8 est environ égale à 0,5).

Ainsi dans le cas de l'application numérique précédemment décrite, il est possible, avec une vitesse de rotation égale à 80% de la vitesse VN de démarrer la ligne d'arbre avec une puissance divisée par deux. En effet, cette vitesse de rotation de 80% de la vitesse VN est supérieure à la vitesse VS (0,8 . 2500 = 2000 Tr / min > 1500 Tr / min).

On voit donc que dans l'exemple ci-dessus lorsqu'un des deux convertisseurs de tension est défaillant (fourniture d'une puissance de 4 MW au lieu de 8 MW), il reste néanmoins possible de démarrer l'alternateur en mode moteur.

Cette invention permet donc d'une part de réduire la puissance totale des convertisseurs nécessaires au démarrage de l'alternateur en mode moteur et à l'entraînement des deux équipements auxiliaires. Elle peut permettre d'autre part, de disposer sans surcoût (ni en terme de puissance des convertisseurs, ni financier) d'un système de démarrage redondant permettant de démarrer l'alternateur en mode moteur en cas de défaillance d'un module de conversion de puissance. Enfin, elle permet de conserver le démarrage de l'alternateur et simultanément l'alimentation d'un auxiliaire en n'utilisant qu'une partie des convertisseurs de tension pour alimenter l'alternateur. Par exemple, dans le septième mode de fonctionnement du convertisseur décrit précédemment on assure simultanément l'alimentation d'un auxiliaire et le démarrage de l'alternateur au moyen d'un seul convertisseur de tension pour l'alimentation de l'alternateur.

Selon une autre alternative, il est possible d'ajouter des convertisseurs de tension supplémentaires dans le moyen de conversion MC reliés à au moins un équipement auxiliaire et/ou à l'alternateur. Ces convertisseurs de tension sont dits supplémentaires dans le sens où ils s'ajoutent aux convertisseurs de tension que le moyen de conversion comporte déjà pour chaque équipement auxiliaire. Par exemple dans le cas de deux équipements auxiliaires, s'il y a trois convertisseurs de tension alors un convertisseur de tension est supplémentaire.

Un tel agencement est avantageux car les convertisseurs supplémentaires peuvent s'ajouter à la puissance des autres convertisseurs de tension et peuvent suppléer pour alimenter un équipement auxiliaire ou l'alternateur en mode moteur. En d'autres termes, cela permet de fournir une redondance pour les deux systèmes (démarrage de l'alternateur en mode moteur et alimentation des équipements auxiliaires). Selon l'état de la technique, il aurait été nécessaire d'ajouter un module de rechange par système.

De plus en utilisant au moins un convertisseur supplémentaire relié à au moins un équipement auxiliaire et à l'alternateur, il peut être possible de démarrer tous les équipements auxiliaires et l'alternateur en mode moteur de manière simultanée. On constate un gain sur la puissance électrique totale des convertisseurs réduit. Par contre, comme dans le cas indiqué ci-avant, on peut obtenir une redondance pour les deux systèmes (démarrage de l'alternateur en mode moteur et alimentation des équipements auxiliaires).

**Revendications**

1. Système de production d'électricité comprenant:

   - un alternateur (G) comprenant un rotor et un stator ;
   - un moyen d'entrainement du rotor (T);

- ledit alternateur ayant un premier mode de fonctionnement dit mode alternateur dans lequel le rotor est entraîné par le moyen d'entrainement du rotor et l'alternateur fournit de l'électricité et un deuxième mode de fonctionnement dit mode moteur dans lequel l'alternateur est alimenté en électricité et le rotor fournit une force mécanique motrice ;

- un moyen de conversion (MC) capable d'alimenter l'alternateur en mode moteur avec une fréquence qui varie de façon que le rotor atteigne une certaine vitesse de rotation; et

- plusieurs équipements électriques auxiliaires (M),

le moyen de conversion comprend pour chacun des équipements électriques auxiliaires un convertisseur de tension (CT) capable d'alimenter ledit équipement auxiliaire, une partie des convertisseurs de tension de l'ensemble des équipements auxiliaires étant capable d'alimenter conjointement l'alternateur en mode moteur, **caractérisé en ce que** lesdits convertisseurs de tension (CT) sont placés en parallèle dans le moyen de conversion (MC) et la somme des puissances électriques desdits convertisseurs (CT) est supérieure ou égale à la puissance pour démarrer l'alternateur en mode moteur jusqu'à sa vitesse nominale.

2. Système selon la revendication 1, comprenant un unique équipement électrique auxiliaire et un moyen de conduction comprenant une première branche reliant le convertisseur de tension à l'alternateur (G) et une deuxième branche reliant le convertisseur de tension (CT) audit équipement électrique auxiliaire, chacune des deux branches comportant un organe de coupure (I1, I2) de manière à alimenter alternativement l'alternateur (G) en mode moteur et ledit équipement électrique auxiliaire (M) avec le convertisseur de tension (CT).

3. Système selon la revendication 1, comprenant un moyen d'alimentation (Tccom) pour alimenter le moyen de conversion (MC), lesdits au moins un équipement électrique auxiliaire (M) étant également reliés au moyen d'alimentation (Tccom) de manière que les au moins un équipement électrique auxiliaire (M) soient alimentés alternativement avec le moyen de conversion (MC) et avec le moyen d'alimentation (Tccom).

4. Système selon l'une des revendications précédentes, dans lequel le moyen de conversion (MC) comprend en outre au moins un convertisseur de tension supplémentaire, ledit convertisseur de tension supplémentaire étant relié par des moyens de conduction à l'alternateur en mode moteur et/ou à au moins un des équipements électriques auxiliaires (M) de manière à permettre une redondance de l'alimentation de l'alternateur et/ou des équipements auxiliaires.

5. Système selon l'une des revendications précédentes, dans lequel les équipements auxiliaires (M) sont des moteurs asynchrones.

6. Système selon l'une des revendications précédentes, dans lequel l'alternateur (G) est synchrone.

7. Système selon l'une des revendications précédentes, dans lequel le moyen d'entrainement du rotor est une turbine à gaz.

8. Système selon la revendication 7, dans lequel la turbine à gaz est une micro-turbine.

9. Système selon l'une des revendications 1 à 6, dans lequel le moyen d'entrainement du rotor est un moteur thermique.

**Patentansprüche**

1. Elektrizitätsproduktionssystem, umfassend:

- einen Wechselstromgenerator (G), einen Rotor und einen Stator umfassend;
- ein Antriebsmittel für den Rotor (T);
- wobei der Wechselstromgenerator einen ersten, Wechselstromgeneratormodus genannten Betriebsmodus, bei dem der Rotor durch das Antriebsmittel für den Rotor angetrieben wird, und der Wechselstromgenerator Elektrizität bereitstellt, und einen zweiten, Motormodus genannten Betriebsmodus aufweist, bei dem der Wechselstromgenerator mit Elektrizität versorgt wird und der Rotor eine mechanische Triebkraft bereitstellt;
- ein Umwandlungsmittel (MC), das imstande ist, den Wechselstromgenerator im Motormodus mit einer Frequenz zu versorgen, die derart variiert, dass der Rotor eine bestimmte Drehgeschwindigkeit erreicht; und
- mehrere elektrische Hilfsausrüstungen (M), wobei das Umwandlungsmittel für jede der elektrischen Hilfsausrüstungen einen Spannungswandler (CT) umfasst, der imstande ist, die Hilfsausrüstung zu versorgen, wobei ein Teil der Spannungswandler der Gesamtheit der Hilfsausrüstungen imstande ist, gemeinsam den Wechselstromgenerator im Motormodus zu versorgen, **dadurch gekennzeichnet, dass** die Spannungswandler (CT) parallel in dem Umwandlungsmittel (MC) platziert sind, und die Summe der elektrischen Leistungen der Wandler (CT) größer oder gleich der Leistung zum Starten des Wechselstromgenerators im Motormodus bis zu dessen Nenngeschwindigkeit ist.

2. System nach Anspruch 1, umfassend eine einzige elektrische Hilfsausrüstung und ein Leitmittel, das einen ersten Ast umfasst, der den Spannungswandler mit dem Wechselstromgenerator (G) verbindet, und einen zweiten Ast, der den Spannungswandler (CT) mit der elektrischen Hilfsausrüstung verbindet, wobei jeder der beiden Äste ein Unterbrechungsorgan (11, 12) beinhaltet, um abwechselnd den Wechselstromgenerator (G) im Motormodus und die elektrische Hilfsausrüstung (M) mit dem Spannungswandler (CT) zu versorgen.

3. System nach Anspruch 1, umfassend ein Versorgungsmittel (Tccom), um das Umwandlungsmittel (MC) zu versorgen, wobei die mindestens eine elektrische Hilfsausrüstung (M) auch mit dem Versorgungsmittel (Tccom) verbunden ist, sodass die mindestens eine elektrische Hilfsausrüstung (M) abwechselnd mit dem Umwandlungsmittel (MC) und mit dem Versorgungsmittel (Tccom) versorgt wird.

4. System nach einem der vorstehenden Ansprüche, wobei das Umwandlungsmittel (MC) weiter mindestens einen zusätzlichen Spannungswandler umfasst, wobei der zusätzliche Spannungswandler anhand von Leitmitteln mit dem Wechselstromgenerator im Motormodus und/oder mit mindestens einem der elektrischen Hilfsausrüstungen (M) verbunden ist, um eine Redundanz der Versorgung des Wechselstromgenerators und/oder der Hilfsausrüstungen zu ermöglichen.

5. System nach einem der vorstehenden Ansprüche, wobei die Hilfsausrüstungen (M) Asynchronmotoren sind.

6. System nach einem der vorstehenden Ansprüche, wobei der Wechselstromgenerator (G) synchron ist.

7. System nach einem der vorstehenden Ansprüche, wobei das Antriebsmittel für den Rotor eine Gasturbine ist.

8. System nach Anspruch 7, wobei die Gasturbine eine Mikro-Turbine ist.

9. System nach einem der Ansprüche 1 bis 6, wobei das Antriebsmittel für den Rotor ein Verbrennungsmotor ist.

**Claims**

1. An electricity production system comprising:

- an alternator (G) comprising a rotor and a stator;
- a rotor drive means (T);
- said alternator having a first operating mode called alternator mode wherein the rotor is driven by the drive means of the rotor and the alternator provides electricity and a second operating mode called motor mode wherein the alternator is electrically powered and the rotor provides a mechanical motive force;
- a conversion means (MC) capable of powering the alternator in motor mode with a frequency which varies so that the rotor reaches a certain speed of rotation; and
- several auxiliary electrical pieces of equipment (M), the conversion means comprises for each of the auxiliary electrical pieces of equipment a voltage converter (CT) capable of powering said auxiliary piece of equipment, some of the voltage converters of all the auxiliary pieces of equipment being capable of jointly powering the alternator in motor mode, **characterised in that** said voltage converters (CT) are placed in parallel in the conversion means (MC) and the sum of the electric powers of said converters (CT) is greater than or equal to the power to start the alternator in motor mode up to its rated speed.

2. The system according to claim 1, comprising a single auxiliary electrical piece of equipment and a conduction means comprising a first branch connecting the voltage converter to the alternator (G) and a second branch connecting the voltage converter (CT) to said auxiliary electrical piece of equipment, each of the two branches including a cut-off member (II, 12) so as to alternately power the alternator (G) in motor mode and said auxiliary electrical piece of equipment (M) with the voltage converter (CT).

3. The system according to claim 1, comprising a powering means (Tccom) for powering the conversion means (MC), said at least one auxiliary electrical piece of equipment (M) being also connected to the powering means (Tccom) so that the at least one auxiliary electrical piece of equipment (M) are powered alternately with the conversion means (MC) and with the powering means (Tccom).

4. The system according to one of the preceding claims, wherein the conversion means (MC) further comprises at least one additional voltage converter, said additional voltage converter being connected by conduction means to the alternator in motor mode and/or to at least one of the auxiliary electrical pieces of equipment (M) so as to allow redundancy of the powering of the alternator and/or the auxiliary pieces of equipment.

**5.** The system according to one of the preceding claims, wherein the auxiliary pieces of equipment (M) are asynchronous motors.

**6.** The system according to one of the preceding claims, wherein the alternator (G) is synchronous.

**7.** The system according to one of the preceding claims, wherein the rotor drive means is a gas turbine.

**8.** The system according to claim 7, wherein the gas turbine is a micro-turbine.

**9.** The system according to one of claims 1 to 6, wherein the rotor drive means is a heat engine.

# FIG.1
## ART ANTERIEUR

# FIG.2

# FIG.3

Pont
redresseur

Pont
onduleur

EP 2 469 701 B1

# FIG.4

**EP 2 469 701 B1**

## RÉFÉRENCES CITÉES DANS LA DESCRIPTION

**Documents brevets cités dans la description**

- US 2004080164 A
- US 2005206343 A